# EUROPEAN PATENT SPECIFICATION

(11) **EP 1 647 428 B1**
(45) Date of publication and mention of the grant of the patent: **18.06.2008**
(21) Application number: 04105059.2
(22) Date of filing: 14.10.2004
(51) Int. Cl.: B60H 1/32

(54) **Method for the estimation of the power consumed by the compressor of a refrigerant circuit in a motor vehicle**
Verfahren zum Schätzen des Leistungsverbrauchs eines Kältemittelkreislaufkompressors in einem Kraftfahrzeug
Procédé d'estimation de la puissance consommée par un compresseur d'un circuit de réfrigérant dans un véhicule automobile

(43) Date of publication of application: 19.04.2006
(73) Proprietor: Ford Global Technologies, LLC, Dearborn, MI 48126 (US)
(72) Inventor: Markowitz, Markus, 50668 Köln (DE); Willey, Jonathan, Great Baddow CM2 7DN (GB); Crisp, Nick, Leigh-on-Sea Essex SS9 4HN (GB)
(74) Representative: Dörfler, Thomas

(56) References cited:
- EP-A- 1 095 804
- EP-B- 0 915 767
- DE-A1- 10 053 438
- US-B1- 6 397 613

## Description

The invention relates to method for the estimation of the power consumed by the compressor of a refrigerant circuit in a motor vehicle and a refrigerant circuit with a controller that is able to execute such a method.

An increasing number of motor vehicles is equipped with an air conditioning system that comprises a refrigerant circuit with a compressor, an evaporator and a condenser. The power consumed by such a circuit, particularly by its compressor, has to be provided by the engine of the vehicle. For an optimal control of said engine with respect to fuel consumption, emissions and performance it is therefore desirable to know the power consumption of the refrigerant circuit in advance. This is particularly true for refrigerant circuits with variable capacity in which the demanded power may vary largely. For this reason, it is proposed in EP 915 767 B1 to estimate the power consumption of the compressor of a refrigerant circuit based on measured values for the discharge pressure at the outlet of the compressor, the speed of the compressor and the flow rate in the evaporator. The determination of the flow rate requires however special sensor equipment, especially if a manual control system is used. A climate control module could give a data feedback, for example by selection of blower speed for estimation of the evaporator air flow, but this requires additional efforts on electric and mechanical hardware.

DE 100 53 438 A1 discloses a compressor that is connected with an inner heat exchanger across a refrigeration circuit. Compressed refrigerant is circulated between the compressor and the heat exchange with a variable output. An adjusting unit adjusts the amount of air blown by the fan. A computer unit ensures that the power needed for the air conditioning system does not adversely affect the power needed to drive the vehicle, and the control of the compressor is carried out to ensure a stable and comfortable control of the vehicle air conditioning. A method for the estimation of the power consumed by the compressor of a refrigerant circuit is based on a calculated compressor intake control pressure value (Ps), a measured compressor discharge pressure value (Pd), a voltage of the fan (BLV) and an ambient temperature (Tin).

Based on this situation it was an object of the present invention to provide means for a reliable estimation of the power consumption of a refrigerant circuit that are particularly suited for low cost vehicles.

This object is achieved by a method according to claim 1 and a refrigerant circuit according to claim 7.

Preferred embodiments are disclosed in the dependent claims.

The method provided by the present invention allows estimating the power consumed by the compressor of a refrigerant circuit in a motor vehicle, wherein said refrigerant circuit comprises in the direction of the flow of the refrigerant (at least) an evaporator, an expansion device, said compressor and a condenser. As usual, the refrigerant (for example chlorofluorohydrocarbon or tetrafluoroethane) is evaporated in the evaporator while taking up heat from air that has to be cooled, and said evaporated refrigerant is then compressed by the compressor and condensed in the condenser while rejecting its heat to a coolant (typically ambient air). The method comprises the following steps:
- The determination of the ambient temperature at the condenser, i.e. the entrance temperature of the aforementioned coolant to which heat is transferred in the condenser. Said ambient temperature may be inferred from other values or it may be measured by a temperature sensor disposed in the vicinity of the condenser. Moreover, the ambient temperature at the condenser is preferably approximated by the ambient temperature of the vehicle which may be measured a distance away from the condenser.
- The determination of the discharge pressure of the compressor, whereby the discharge pressure can be measured everywhere between the outlet of the compressor and the expansion device. That means package requirements could be taken into account advantageously when locating the pressure sensor. E.g. the sensor could be located at the inlet, at the outlet, or on the condenser itself. The pressure drop at the refrigerant side of the condenser is relatively small and can be taken into account when calibrating the specific refrigerant circuit, e.g. with a heat transfer effectiveness correction.
- The determination of a reference pressure, being a vapour pressure of the refrigerant that corresponds to the ambient temperature determined at the condenser. Said vapour pressure being called "reference pressure" in the following. This reference pressure may for example be read from a lookup-table for the particular refrigerant that is used.

The calculation of a "difference pressure" as a difference between the discharge pressure at the outlet of the compressor and the aforementioned reference prepssure. Said difference pressure may optionally be corrected based on the condenser heat transfer effectiveness.

The heat transfer effectiveness term describes the performance of the condenser by characterising the heat transfer in the heat exchanger: How much higher are both actual condensing temperature and condensing pressure in comparison to the ambient conditions to reject a certain amount of heat? With a value table for different conditions an adjustment term can be generated, which can be taken into account for different condenser installations.

In a further step, the aforementioned difference pressure or its corrected value may be used as an input for a lookup-table that yields as output the power consumed by the compressor, i.e. the value which is looked for. Said lookup-table may for example be obtained experimentally for each type of (or even for each individual) motor vehicle and/or refrigerant circuit.

The method described above is particularly suited for low cost vehicles because it can readily be implemented and merely requires the measurement of the discharge pressure at the outlet of the compressor and an ambient temperature. In many cases, these parameters are already available in the control system of a motor vehicle because they are needed for other purposes, too, making additional hardware unnecessary. Moreover, said two parameters allow a surprisingly precise estimation of the consumed power of the compressor which even proves to be better than the results of more complicated methods.

While the discharge pressure of the compressor may optionally be inferred from other parameters, it is preferably directly measured by a pressure sensor that is disposed in the refrigerant circuit somewhere between compressor and condenser, a section in which there is an approximately constant pressure.

According to a further development of the method, the torque demanded by the compressor is determined, too. This determination is typically based on the estimated consumed power and the (rotational) speed of the compressor. As the compressor is usually driven by the engine of the vehicle, the speed of the compressor has a fixed relation to the speed of the engine which is generally already known. Therefore, no additional equipment will be required for the determination of the speed of the compressor.

Optionally a transient term is added to the estimated consumed power during a limited time after a start of the compressor. Said limited time may for example last from about 1 s to about 30 s, preferably from 6 s to 10 s. The additional term can compensate for transient effects according to the starting characteristics of the compressor.

The estimated value for the power consumed by the compressor of the refrigerant circuit may be used for various purposes. Preferably it is used for the control of the power generation of the engine of the vehicle such that it may remain close to optimum with respect to fuel consumption, emissions, idle stability, cruise smoothness and performance.

The invention further relates to a refrigerant circuit for a motor vehicle, comprising the following components:
- A condenser disposed downstream of the compressor for condensing the refrigerant and for rejecting heat.
- An evaporator disposed downstream of the condenser for evaporating the condensed refrigerant and for extracting heat from a medium to be cooled.
- A temperature sensor for measuring ambient temperature (at the condenser or elsewhere in the vehicle).
- A pressure sensor for measuring the discharge pressure of the compressor.
- A data processing unit that is coupled to said temperature sensor and said pressure sensor and that is adapted to execute a method of the aforementioned kind.

The refrigerant circuit allows executing a method of the kind described above. Therefore, reference is made to the preceding description for more information on the details, advantages and improvements of that refrigerant circuit.

The refrigerant circuit may comprise an tube system (OT). This allows a comparably cost effective realization. Moreover, the heating/ventilation/air conditioning (HVAC) system in which the evaporator cools air for the cabin may particularly be operated manually. In this case, no information about the flow of refrigerant is available without additional effort, thus making the proposed method particularly advantageous.

In the following, the present invention is described by way of example with reference to the accompanying drawings, in which
- Fig. 1: is a schematic diagram of a refrigerant circuit according to the present invention;
- Fig. 2: is a diagram showing measured torques of a compressor and the torque predicted by a method according to the present invention.

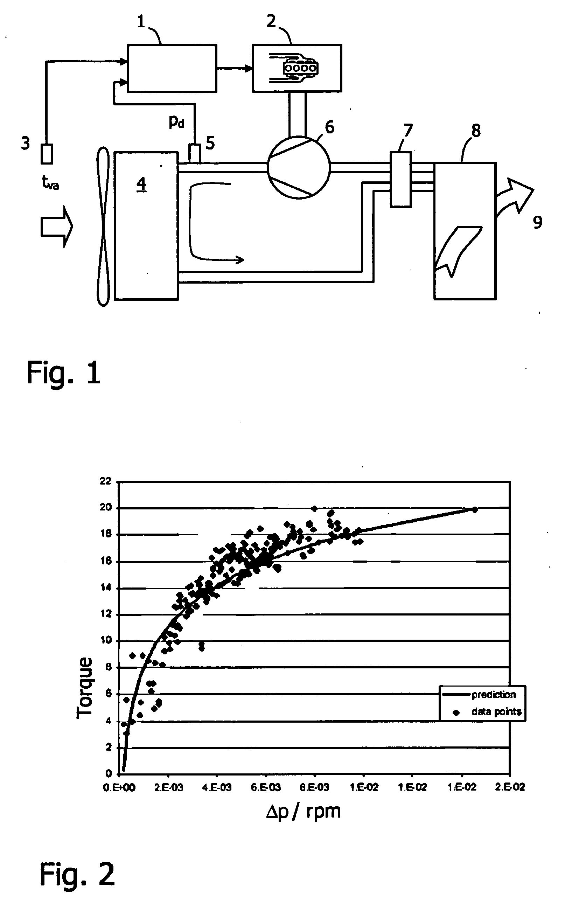

Figure 1 shows schematically a typical refrigerant circuit that is used in a motor vehicle for air conditioning. The refrigerant circuit comprises the following components:
- An evaporator 8 that is placed in the heating/ventilation/air conditioning (HVAC) unit (not shown) and cools air 9, which is taken from inside or outside the vehicle's cabin and then directed into the cabin to provide cooling, while the refrigerant of the circuit is evaporated.
- An expansion device 7 for regulating the refrigerant pressure at the outlet of the evaporator.
- A compressor 6 for compressing the evaporated refrigerant that enters the compressor 6 at its suction side and leaves it at the discharge pressure p_{d} on the compression side. The compressor 6 is mechanically coupled to the internal combustion engine 2 of the vehicle for obtaining power from there.
- A condenser 4 in which the evaporated refrigerant is condensed while rejecting heat to ambient air that is typically blown through the condenser 4 by a fan. The condensed refrigerant then returns via the expansion device 7 to the evaporator 8 to complete the cycle.

The refrigerant circuit typically comprises additional components, e.g. a refrigerant storage accumulator/receiver, which are not shown in the figures.

Figure 1 further shows a temperature sensor 3 that is adapted to measure the ambient temperature of the condenser 4 or of the vehicle. The sensor 3 is usually disposed in the area of the inner side of the front bumper or behind that. If such a sensor should not be available, the ambient temperature can also be determined based on the inlet air temperature of the engine that is normally available to the motor control unit (so-called "inferred ambient temperature"). Moreover, a combination of both values (ambient air temperature and inlet air temperature) can be employed in order to achieve a better estimation of the temperature of the air flowing into the condenser.

Figure 1 further shows a pressure sensor 5 disposed in the line between compressor 6 and condenser 4 to sense the discharge pressure p_{d} of the compressor outlet. The sensor 5 could also be located between condenser 6 and expansion device 7. Both sensors 3, 5 are coupled to a (powertrain) control module 1 that controls the engine 2. Said control module 1 may be implemented e.g. by a microprocessor with usual components (CPU, storage, I/O interfaces etc.) and appropriate software.

In the system described above, the present invention relates to an algorithm to determine the momentary torque requirement of the air conditioning (AC) compressor 6 that is driven by the engine 2 of the motor vehicle. The vehicle's powertrain control module 1 is thus enabled to take into account the AC compressor torque demand when changing engine speed or engine load according to driver demands, as well as to compensate the compressor torque demand when engaging or disengaging the compressor 6. These aspects are explained in more detail in the following.

The compressor 6 of the automotive air conditioning takes torque from the engine 2 to provide refrigerating capacity to the evaporator 8 and thereby cabin cooling to the vehicle's occupants. The required torque can be significant in hot climate conditions, when high cabin cooling demands have to be satisfied. On the other hand, the torque requirements are low when the AC system is running at low load, e.g. for de-humidification in wet/cool conditions. Therefore, the required torque to drive the AC compressor 6 varies greatly with the operating conditions of the AC system and specifically with climatic conditions. Influence parameters are e.g. ambient temperature and humidity, solar heat load, momentary cabin temperature, vehicle speed, settings of the HVAC controls, i.e. blower speed, recirculated or fresh air intake etc.

It is important to accurately determine/predict the AC compressor torque demand because inaccurate values would lead to inappropriate load compensation and thereby deteriorated driveability as well as the risk of engine stalls or engine speed hang-ups on return to idle when stopping the vehicle.

A precise torque estimation improves fuel economy and/or optimizes emissions primarily because the torque reserve at idle is not required. Load compensation for AC is not required as torque estimation is more precisely with the presented method. Each uncompensated or poorly modelled accessory torque leads to a need for torque reserve to compensate. At idle spark retard equates to wasted fuel. Good idle / cruise load rejection leads to smoother air and spark control. Smoothness allows for better fuel control, which is an emissions benefit.

For accurate prediction (calculation) of the compressor torque demand (or power demand respectively) the refrigerant mass flow, the refrigerant enthalpy change at the compressor, and the compressor isentropic efficiency map must be known. The refrigerant mass flow is the primary difficulty. For a fixed capacity compressor, it could be calculated using the compressor's nominal capacity, the volumetric efficiency map and compressor speed - however, the refrigerant density or suction pressure needs to be also known for this. Unfortunately, in the case of a variable capacity compressor, there is no external indication of the percentage capacity the compressor is running on. Once the suction pressure is approaching the control pressure, the compressor control valve adjusts the compressor capacity to maintain this pressure and thereby evaporator temperature. The enthalpy change of the refrigerant caused by the compressor can be calculated using refrigerant pressure on compressor suction and discharge ports.

Estimation of the compressor torque demand is still possible based on compressor discharge pressure. The estimation accuracy of this approach is often limited, however, because of the fact that said discharge pressure itself is no direct indication for the load on the AC system, or the amount of cooling capacity provided to the vehicle's cabin. Low load on the AC system with the condenser exposed to a high ambient air temperature can result in the same discharge pressure value as high AC load at low ambient temperature. Therefore, additional data that characterise the suction side, i.e. evaporator airflow amount, evaporator temperature, or suction pressure etc. are often utilised to improve the estimation accuracy. However, sensors or an electronic HVAC control module must be available to provide this data.

In vehicles with a cost-efficient HVAC system, consisting of e.g. a clutch cycling orifice tube (CCOT) refrigerant circuit or a so-called TXV system and manually operated HVAC unit, no data is available from the suction side of the refrigerant circuit, unless sensors are fitted specifically for this purpose. The present invention solves this problem and provides an accurate estimation of compressor torque for these HVAC systems, too.

According to the basic system balance equation, the heat rejected by the AC condenser 4 equals the heat taken in from the evaporator 8 (evaporating capacity) plus the enthalpy change of the refrigerant generated by the compressor 4, or the compressor work respectively. The relation of evaporating capacity to compressor work is the effectiveness of the process, or the coefficient of performance (COP). Therefore, the compressor power can be calculated from the heat flux rejected by the condenser and the COP. Also, the COP correlates well to the compressor work. Hence, the compressor power correlates to the condenser heat rejection.

The condenser heat rejection can be derived from the difference of the actual condensing pressure (compressor discharge pressure) p_{d} and the vapour pressure pᵥₐ that a liquid/vapour refrigerant mix would have at the temperature tᵥₐ of the air entering the condenser 4. This "difference pressure" or pressure excess fraction Δp_{de}, optionally corrected by an assumption for the condenser heat transfer effectiveness p_{de,corr}, strongly correlates to the heat rejected by the condenser 4 (if no such correction is made, p_{de,corr} = p_{de} is assumed in the following).

Therefore, the compressor power has a strong correlation to the corrected compressor discharge pressure excess fraction Δp_{de,corr}, i.e. the corrected compressor discharge pressure excess fraction is a very good means of estimating the compressor power demand. The compressor torque can then easily be calculated from the estimated compressor power with the compressor speed (which is proportional to engine speed). Hence, the compressor torque correlates to Δp_{de,corr} divided by engine speed.

In summary, the refrigerant circuit and the method according to the invention are characterized by the following features (which may be considered alone or in combination):
- A temperature sensor 3 fitted to the vehicle that measures the outside air temperature, or ambient air temperature tᵥₐ and thereby the temperature of the air approaching the AC condenser, which is used to calculate the refrigerant vapour pressure pᵥₐ by using a function or a lookup-table containing the refrigerant properties (vapour pressure = f(temperature tᵥₐ)).
- A pressure sensor 5 on the outlet side of the vehicle's refrigerant circuit to measure the refrigerant discharge pressure p_{d}, and calculation of the discharge pressure excess fraction or difference pressure Δp_{de} = p_{d} - pᵥₐ.
- Correction of the difference pressure Δp_{de} to account for the condenser heat transfer effectiveness, Δp_{de,corr} (optional).
- A lookup table or a function defining the relationship between compressor power or compressor torque (using engine speed) and difference pressure Δp_{de} or corrected difference pressure Δp_{de,corr}.
- The calculated compressor torque demand is updated continually for all engine speeds.
- The calculated compressor torque is used to stabilise the engine 2 on return to idle, e.g. de-clutch and stop the vehicle.
- The calculated compressor torque is used to stabilise the engine 2 during compressor engagements, especially when the compressor has not been disengaged long enough for the refrigerant pressure to equalise on suction and discharge sides of the refrigerant circuit.
- The calculated compressor torque is used to stabilise the engine 2 during compressor disengagements, to prevent the engine speed from decreasing or increasing during the disengagement.
- The calculated compressor torque is used to stabilise the engine during AC clutch cycling e.g. with a fixed capacity compressor.

During the start of the compressor, torque phenomena occur due to the inertia of the compressor and due to the pressure build-up in the refrigerant circuit, i.e. due to the starting characteristics of the compressor. In order to deal with these effects, a special transient term can be provided for the first 6-10s of the starting of the compressor. Said transient term can be calibrated into tables of the motor control logic and shows a dependency on the engine speed, the time since start of the compressor and the corrected discharge pressure excess fraction. The transient term plays a role only during switching-on of the compressor. During switching-off of the compressor, during changes of the engine speed, during disengagement of the gear ("return to idle") or the like only the fixed term described above is applied.

The compressor torque calculation is preferably carried out continuously during engine run with an update rate of e.g. 50 ms.

Figure 2 shows in a diagram the torque demand of a compressor in dependence on the corrected difference pressure Δp_{de,corr} divided by the compressor speed. It can be seen that the curve that was calculated according to the present invention provides a very accurate prediction function for the actual data.

## Claims

1. A method for the estimation of the power consumed by the compressor (6) of a refrigerant circuit in a motor vehicle, wherein said circuit comprises an evaporator (8), an expansion device (7), said compressor (6), a condenser (4) and a refrigerant circulating in said circuit, the method comprising:
a) determination of the ambient temperature (tva) at the condenser (4);
b) determination of the discharge pressure (p_{d}) somewhere between the outlet of the compressor (6) and the expansion device;
c) determination of a reference pressure (pva), being a vapour pressure of the refrigerant at the determined ambient temperature (tva);
e) calculation of a difference pressure (pde) as difference between discharge pressure (pd) and reference pressure (pva);
f) determination of the compressor power by way of a lookup table or a function based on the determined difference pressure (pde) or based on a corrected value (pde,cow) of the difference pressure (pde) corrected by the condenser (4) heat transfer effectiveness.

2. The method according to claim 1, **characterised in that** the ambient temperature (tva) at the condenser (4) is approximated by the ambient temperature of the motor vehicle.

3. The method according to claim 1 or 2, **characterised in that** the discharge pressure (pd) of the compressor (6) is measured in the refrigerant circuit between compressor (6) and condenser (4).

4. The method according to one of claims 1 to 3, **characterised in that** the torque demanded by the compressor (6) is determined based on the consumed power and the speed of the compressor (6).

5. The method according to one of claims 1 to 4, **characterised in that** a transient term is added to the estimated power consumed by the compressor (6) during a limited time after a start of the compressor (6) to compensate transient effects according to the starting characteristics of the compressor.

6. The method according to one of claims 1 to 5, **characterised in that** the estimated consumed power of the compressor (6) is used to control the power generation of the engine (2) of the vehicle.

7. Refrigerant circuit for a motor vehicle, comprising
a) a compressor (6) driven by the engine (2) of the vehicle for compressing a refrigerant;
b) a condenser (4) disposed downstream of the compressor (6) for condensing the refrigerant and for rejecting heat;
c) an evaporator (8) disposed downstream of the condenser (4) for evaporating the condensed refrigerant and for extracting heat from a medium (9) to be cooled;
d) a temperature sensor (3) for measuring ambient temperature (tva);
e) a pressure sensor (5) for measuring the discharge pressure (pd) of the compressor (6);
f) a data processing unit (1) that is coupled to said temperature sensor (3) and said pressure sensor (5) and **characterised in that** the data processing unit (1) is adapted to execute a method according to one of claims 1 to 6.

## Patentansprüche

1. Verfahren zum Schätzen des Leistungsverbrauchs eines Kältemittelkreislaufkompressors (6) in einem Kraftfahrzeug, wobei der Kreislauf einen Verdampfer (8), eine Expansionsvorrichtung (7), den Kompressor (6), einen Kondensator (4) und ein im Kreislauf zirkulierendes Kältemittel umfasst, wobei das Verfahren Folgendes umfasst:
a) Bestimmen der Umgebungstemperatur (tva) am Kondensator (4);
b) Bestimmen des Austrittsdrucks (pd) an beliebiger Stelle zwischen dem Auslass des Kompressors (6) und der Expansionsvorrichtung;
c) Bestimmen eines Referenzdrucks (pva), bei dem es sich um einen Dampfdruck des Kältemittels auf der bestimmten Umgebungstemperatur (tva) handelt;
e) Berechnen eines Differenzdrucks (pde) als die Differenz zwischen dem Austrittsdruck (pd) und dem Referenzdruck (pva);
f) Bestimmen der Kompressorleistung durch eine Nachschlagetabelle oder eine Funktion, die auf dem bestimmten Differenzdruck (pde) oder einem korrigierten Wert (pde, corr) des Differenzdrucks (pde) basiert, der durch die Wärmeübertragungsleistung des Kondensators (4) korrigiert wird.

2. Verfahren nach Anspruch 1, **dadurch gekennzeichnet, dass** sich der Umgebungstemperatur (tva) am Kondensator (4) durch die Umgebungstemperatur des Kraftfahrzeugs angenähert wird.

3. Verfahren nach Anspruch 1 oder 2, **dadurch gekennzeichnet, dass** der Austrittsdruck (pd) des Kompressors (6) im Kältemittelkreislauf zwischen dem Kompressor (6) und dem Kondensator (4) gemessen wird.

4. Verfahren nach einem der Ansprüche 1 bis 3, **dadurch gekennzeichnet, dass** das von dem Kompressor (6) erforderte Drehmoment auf Grundlage des Leistungsverbrauchs und der Drehzahl des Kompressors (6) bestimmt wird.

5. Verfahren nach einem der Ansprüche 1 bis 4, **dadurch gekennzeichnet, dass** der geschätzten durch den Kompressor (6) verbrauchten Leistung während einer begrenzten Zeit nach einem Start des Kompressors (6) ein Übergangsterm hinzugefügt wird, um Übergangseffekte gemäß den Starteigenschaften des Kompressors auszugleichen.

6. Verfahren nach einem der Ansprüche 1 bis 5, **dadurch gekennzeichnet, dass** der geschätzte Leistungsverbrauch des Kompressors (6) zur Steuerung der Energieerzeugung des Motors (2) des Fahrzeugs verwendet wird.

7. Kältemittelkreislauf für ein Kraftfahrzeug, der Folgendes umfasst:
a) einen Kompressor (6), der von dem Motor (2) des Fahrzeugs zum Komprimieren von Kältemittel angetrieben wird;
b) einen stromabwärts des Kompressors (6) angeordneten Kondensator (4) zum Kondensieren des Kältemittels und zur Wärmeabgabe;
c) einen stromabwärts des Kondensators (4) angeordneten Verdampfer (8) zum Verdampfen des kondensierten Kältemittels und zum Abführen von Wärme (9) aus einem zu kühlenden Medium (9);
d) einen Temperatursensor (3) zum Messen der Umgebungstemperatur (tva);
e) einen Drucksensor (5) zum Messen des Austrittsdrucks (pd) des Kompressors (6);
f) eine Datenverarbeitungseinheit (1), die mit dem Temperatursensor (3) und dem Drucksensor (5) verbunden ist,
**dadurch gekennzeichnet, dass** die Datenverarbeitungseinheit (1) zum Durchführen eines Verfahrens nach einem der Ansprüche 1 bis 6 ausgeführt ist.

## Revendications

1. Procédé d'estimation de la puissance consommée par le compresseur (6) d'un circuit de réfrigérant dans un véhicule automobile, ledit circuit comportant un évaporateur (8), un dispositif (7) de détente, ledit compresseur (6), un condenseur (4) et un réfrigérant circulant dans ledit circuit, le procédé comportant :
a) la détermination de la température ambiante (tva) au niveau du condenseur (4) ;
b) la détermination de la pression de refoulement (pd) quelque part entre la sortie du compresseur (6) et le dispositif de détente ;
c) la détermination d'une pression de référence (pva), celle-ci étant une pression de vapeur du réfrigérant à la température ambiante (tva) déterminée ;
d) le calcul d'une pression différentielle (pde) comme étant la différence entre la pression de refoulement (pd) et la pression de référence (pva) ;
e) la détermination de la puissance du compresseur au moyen d'un tableau de recherche ou d'une fonction sur la base de la pression différentielle (pde) déterminée ou sur la base d'une valeur corrigée (pde, corr) de la pression différentielle (pde) corrigée du rendement de transfert de chaleur du condenseur (4).

2. Procédé selon la revendication 1, **caractérisé en ce que** la température ambiante (tva) au niveau du condenseur (4) est approchée par la température ambiante du véhicule automobile.

3. Procédé selon la revendication 1 ou 2, **caractérisé en ce que** la pression de refoulement (pd) du compresseur (6) est mesurée dans le circuit de réfrigérant entre le compresseur (6) et le condenseur (4).

4. Procédé selon l'une des revendications 1 à 3, **caractérisé en ce que** le couple demandé par le compresseur (6) est déterminé sur la base de la puissance consommée et de la vitesse du compresseur (6).

5. Procédé selon l'une des revendications 1 à 4, **caractérisé en ce qu'**un terme transitoire est ajouté à la puissance estimée consommée par le compresseur (6) pendant un temps limité après un démarrage du compresseur (6) pour compenser les effets transitoires selon les caractéristiques de démarrage du compresseur.

6. Procédé selon l'une des revendications 1 à 5, **caractérisé en ce que** la puissance estimée consommée par le compresseur (6) est utilisée pour commander la production d'énergie du moteur (2) du véhicule.

7. Circuit de réfrigérant pour véhicule automobile, comportant
a) un compresseur (6) entraîné par le moteur (2) du véhicule afin de comprimer un réfrigérant ;
b) un condenseur (4) disposé en aval du compresseur (6) afin de condenser le réfrigérant et de rejeter de la chaleur ;
c) un évaporateur (8) disposé en aval du condenseur (4) afin d'évaporer le réfrigérant condensé et d'extraire de la chaleur d'un milieu (9) à refroidir ;
d) un capteur (3) de température destiné à mesurer la température ambiante (tva) ;
e) un capteur (5) de pression destiné à mesurer la pression de refoulement (pd) du compresseur (6) ;
f) une unité (1) de traitement de données couplée audit capteur (3) de température et audit capteur (5) de pression et **caractérisée en ce que** l'unité (1) de traitement de données est prévue pour exécuter un procédé selon l'une des revendications 1 à 6.
